# EUROPÄISCHE PATENTANMELDUNG

(11) **EP 4 822 622 A1**
(43) Veröffentlichungstag der Anmeldung: **14.10.2026**
(21) Anmeldenummer: 25168873.5
(22) Anmeldetag: 07.04.2025
(51) Int. Cl.: G06Q 10/0834, G06V 10/25, G06V 10/74, G06V 10/75, G06T 7/62, G06Q 50/06

(54) **COMPUTERIMPLEMENTIERTES VERFAHREN ZUR ERMITTLUNG EINER ZUR VERFÜGUNG STEHENDEN LADEKAPAZITÄT EINES FRACHTRAUMS, SYSTEM ZUR DATENVERARBEITUNG, COMPUTERPROGRAMM UND COMPUTERLESBARER DATENTRÄGER**

(71) Anmelder: Fraunhofer-Gesellschaft zur Förderung der angewandten Forschung e.V., 80686 München (DE); Schenker AG, 45128 Essen (DE)
(72) Erfinder: Stenzel, Jonas, 80686 München (DE); Rest, Christopher, 80686 München (DE); Bredtmann, Oliver, 45128 Essen (DE)
(74) Vertreter: Heeschen Pültz Patentanwälte PartGmbB

(57) **Zusammenfassung**

Die Erfindung betrifft ein computerimplementiertes Verfahren zur Ermittlung einer zur Verfügung stehenden Ladekapazität (8) eines Frachtraums (4), umfassend die Schritte: Empfangen (102) einer Abbildung (1) des Frachtraums (4) aus einer Öffnungsperspektive; Bestimmen (104) einer Tiefeninformation (14) des Frachtraums basierend auf der Abbildung; Bestimmen (106) eines Frachtraumanfangs (6) des Frachtraums (4) basierend auf der Abbildung (1); Ermitteln (108) der zur Verfügung stehenden Ladekapazität (8) basierend auf der Tiefeninformation (14) und dem Frachtraumanfang (6).

## Beschreibung

Die Erfindung betrifft ein computerimplementiertes Verfahren zur Ermittlung einer zur Verfügung stehenden Ladekapazität eines Frachtraums, ein Verfahren zum Trainieren eines ersten neuronalen Netzes, ein Verfahren zum Trainieren eines zweiten neuronalen Netzes, ein Verfahren zum Beladen eines Frachtraums, ein System zur Datenverarbeitung, ein Computerprogramm und einen computerlesbaren Datenträger.

Verfahren zur Ermittlung einer zur Verfügung stehenden Ladekapazität eines Frachtraums sind grundsätzlich bekannt. Bei der Beladung eines Frachtraums, beispielsweise eines LKW, wird die Beladung des LKW in der Regel ohne genaue Information über die Abmessungen der Packstücke geplant. Die Anordnung der Packstücke erfolgt gewöhnlich durch den Fahrer oder einen Kommissionierer.

Die Beladung mit den Packstücken wird in der Regel entweder anhand von Erfahrungswerten oder durch Vorgabe von einer Software gemäß ermittelten Stellpositionen für die Packstücke durchgeführt. Die LKW starten nach der Beladung in der Regel mit nicht vollständig gefüllten Frachträumen. Das Gleiche gilt für die meisten anderen Frachträume, beispielsweise von Containern. Darüber hinaus besteht das Problem von nicht vollständig ausgenutzten Frachträumen auch bei solchen Transporteinheiten, die durch einen offenen Raum definiert werden, beispielsweise bei Paletten oder Gitterboxen.

Ohne eine valide Information über die Packstückabmessungen und/oder ohne Information über die idealen Stellpositionen erfolgt die Beladung mit den Packstücken in der Regel nicht optimal, sodass nach Ende der Beladung noch freie Stellfläche vorhanden ist. Der Beladungszustand eines Frachtraums ist den verantwortlichen Personen in der Regel nicht oder lediglich unvollständig bekannt.

Aufgrund dessen sind die Disponenten nicht in der Lage, zusätzliche Ladungen auf den von ihnen beplanten Frachträumen zu akzeptieren oder zuzuordnen. Somit werden beispielsweise LKW mit nicht vollständig befüllten Frachträumen bewegt, sodass in Summe über einen Fuhrpark eine höhere Anzahl an LKW zu bewegen ist. Dies führt zu höheren Kosten der Logistik und geht mit einem schlechteren ökologischen Fußabdruck einher.

Die DE102021211827A1 offenbart ein Verfahren und eine Prozessorschaltung zum Schätzen eines absoluten Flächenwerts einer freien Ladefläche und eines absoluten Längenwerts freier Lademeter in einem Frachtraum sowie ein entsprechendes Logistiksystem. Hierbei wird mit einer Kamera ein Bild von einem Frachtraum erstellt. Mit einem Segmentierungsalgorithmus werden anschließend die Pixel im Frachtraumbild berechnet, welche eine freie Ladefläche repräsentieren. Der Algorithmus berechnet basierend auf einer vordefinierten Breite des Frachtraums und den Freiflächenpixel, die Freifläche in Quadratmetern. Ein Nachteil dieses Verfahrens besteht darin, dass ein Freivolumen nicht berechnet werden kann. Darüber hinaus wird angenommen, dass die Gesamtladefläche horizontal ausgerichtet oder angeordnet ist, um über die einzelnen Pixel die absolute Fläche zu bestimmen. Dies setzt jedoch voraus, dass der Benutzer die Kamera ideal horizontal zu einer unteren Laderaumkante ausrichtet, bevor er das Bild aufnimmt. Dies ist im Alltag der Beladung von Frachträumen jedoch nicht auf Dauer realistisch durchführbar, sodass die berechnete Fläche ungenau ist. Ferner ist die Berechnung der Freifläche auch deswegen ungenau, da lediglich 2D-Kamerabilder vorliegen und die perspektivische Verzerrung der Kamera keine Berechnung genauer 3D-Informationen sowie Freiflächenberechnung zulässt.

Die DE102018117541B4 offenbart ein Verfahren zur Überwachung des Beladungszustandes von Nutzfahrzeugen oder Wechselaufbauten für Nutzfahrzeuge. Mit einer Kamera wird ein Prüfbild eines Laderaums aufgenommen, das anschließend mit einer Auswerteeinheit bewertet wird. Ein Algorithmus vergleicht Pixel im aufgenommenen Laderaumbild mit Referenzbildpixeln, bei denen der Laderaum leer ist. Insbesondere ermittelt der Algorithmus für rechteckige Laderaumbereiche, ob diese frei oder belegt sind. Damit der Vergleich mit den Referenzbildpixeln möglich ist, ist die Kamera zur Aufnahme des Prüfbilds stets exakt an der gleichen Stelle zu positionieren, sodass eine individuelle Aufnahme des Laderaums nicht möglich ist. Ein Freivolumen kann mit dem offenbarten Verfahren nicht berechnet werden. Ferner ist eine Ermittlung der Freifläche in Quadratmetern nicht oder lediglich ungenau möglich. Darüber hinaus ist die Kamera zur Laderaumüberwachung fest installiert, wodurch unrealistisch hohe Kosten verursacht werden, da jeder Frachtraum mit einer solchen Kamera auszurüsten ist. Außerdem treten dadurch Abdeckungen auf.

Die DE102021118879A1 offenbart ein Verfahren und ein System zur Überwachung eines Laderaums, bei dem das Innere des Laderaums mit mindestens einem abstandsmessenden, tiefenempfindlichen Sensor dreidimensional vermessen wird. Ferner werden weitere im Hinblick auf den Laderaum ermittelbare Daten und Ergebnisse unterschiedlicher Sensor- und Messeinrichtungen sowie weiterer unterschiedlicher Datenverarbeitungseinrichtungen über Daten-Kommunikationseinrichtungen an Rechen- oder Auswerteeinrichtungen übertragen. Ein Algorithmus berechnet aus den Sensordaten Freiflächen und Freivolumen. Der abstandsmessende, tiefenempfindliche Sensor ist fest in dem Laderaum installiert, sodass hohe Kosten entstehen. Darüber hinaus sind diese Sensoren der regelmäßigen Beladung mit Packstücken ausgesetzt, sodass diese besonders robust auszuführen und somit teuer sind. Darüber hinaus werden diese Sensoren regelmäßig beschädigt, sodass das Verfahren lediglich für eine Teilmenge der Laderäume tatsächlich ausführbar ist. Darüber hinaus erfordert die Reparatur oder der Austausch dieser Sensoren in den Laderäumen eine entsprechende Logistik. Im Logistikalltag ist diese Variante somit nur bedingt praktikabel.

Die DE102015216595A1 offenbart eine Vorrichtung zur Optimierung der Volumenausnutzung in Logistikanwendungen. Hierfür wird ein Bildsensor zur Erzeugung von Rasterbilddaten und ein Ortssensor zur Ergänzung der Rasterbilddaten mit Ortsinformation zu Transportgutdaten verwendet. Mit einer Verarbeitungseinrichtung werden Transportgutdaten mit einem vorgegebenen Volumen abgeglichen. Die Vorrichtung erfordert nicht nur zwei unterschiedliche Sensoren, von denen ferner einer lediglich als dreidimensionaler Sensor und somit als teurer Sensor beschrieben ist, sondern es erfordert darüber hinaus auch eine Volumeneingabe. Im laufenden Logistikbetrieb ist diese Vorrichtung somit lediglich eingeschränkt praktikabel.

Es ist daher eine Aufgabe der vorliegenden Erfindung ein computerimplementiertes Verfahren zur Ermittlung einer zur Verfügung stehenden Ladekapazität eines Frachtraums, ein Verfahren zum Trainieren eines ersten neuronalen Netzes, ein Verfahren zum Trainieren eines zweiten neuronalen Netzes, ein Verfahren zum Beladen eines Frachtraums, ein System zur Datenverarbeitung, ein Computerprogramm und einen computerlesbaren Datenträger bereitzustellen, die einen oder mehrere der genannten Nachteile vermindern oder beseitigen. Insbesondere ist es eine Aufgabe der Erfindung, eine Lösung bereitzustellen, die im laufenden Logistikbetrieb eine sichere Ermittlung der zur Verfügung stehenden Ladekapazität eines teilweise befüllten Frachtraums ermöglicht.

Diese Aufgabe wird gelöst mit den Verfahren, dem System zur Datenverarbeitung, dem Computerprogramm und dem computerlesbaren Datenträger nach den Merkmalen der unabhängigen Patentansprüche. Weitere vorteilhafte Ausgestaltungen dieser Aspekte sind in den jeweiligen abhängigen Patentansprüchen angegeben. Die in den Patentansprüchen, der Beschreibung und den Zeichnungen offenbarten Merkmale sind einzeln, in beliebiger, technologisch sinnvollerweise miteinander kombinierbar, wobei weitere Ausführungsvarianten der Erfindung aufgezeigt werden.

Gemäß einem ersten Aspekt wird die eingangs genannte Aufgabe gelöst durch ein computerimplementiertes Verfahren zur Ermittlung einer zur Verfügung stehenden Ladekapazität eines Frachtraums, umfassend die Schritte: Empfangen einer Abbildung des Frachtraums aus einer Öffnungsperspektive; Bestimmen einer Tiefeninformation, insbesondere eines Tiefenbilds und/oder einer Punktewolke, basierend auf der Abbildung; Bestimmen eines Frachtraumanfangs des Frachtraums basierend auf der Abbildung; Ermitteln der zur Verfügung stehenden Ladekapazität basierend auf der Tiefeninformation und dem Frachtraumanfang.

Es ist insbesondere bevorzugt, dass die Tiefeninformation basierend auf der Abbildung mit einem ersten trainierten neuronalen Netz bestimmt wird, wobei das erste neuronale Netz dazu trainiert ist, von der Abbildung auf die Tiefeninformation zu schließen. Alternativ kann die Tiefeninformation mittels des structure for motion Verfahrens bestimmt werden. Darüber hinaus kann die Tiefeninformation mit einem Tiefensensor, beispielsweise einem LIDAR-Sensor, bestimmt werden.

Der Erfindung liegt die Erkenntnis zugrunde, dass eine zur Verfügung stehende Ladekapazität eines Frachtraums mit lediglich einer einzelnen Abbildung des Frachtraums ermittelbar ist. Diese Abbildung kann beispielsweise ein einfaches RGB-Kamerabild eines Smartphones sein, ohne dass weitere spezifische Anforderungen, wie beispielsweise eine exakte Ausrichtung oder die Verwendung eines Tiefensensors, zu erfüllen sind. Ferner können mehrere Abbildungen aus zwei oder mehr Perspektiven verwendet werden, sodass weniger Abdeckungen durch Ladegut zu erwarten sind.

Die Verwendung dieser Abbildung zur Bestimmung der Tiefeninformation und zur Bestimmung des Frachtraumanfangs bietet einen besonders einfachen und gleichzeitig präzisen Ansatz zur Ermittlung der zur Verfügung stehenden Ladekapazität, beispielsweise einer Ladefläche oder eines Ladevolumens. Der Erfindung liegt darüber hinaus die Erkenntnis zugrunde, dass mit neuronalen Netzen aufgrund der Vergleichbarkeit von Frachträumen Tiefeninformationen und Frachtraumanfänge mit einem geringen Fehler bestimmbar sind.

Die Ladekapazität kann ein Lademeter, eine Ladefläche und/oder ein Ladevolumen sein. Der Frachtraum kann durch geschlossene, teilweise offene und vollständig offene Frachteinheiten definiert oder ausgebildet werden. Der Frachtraum kann beispielsweise von einem Semi-Trailer, einer Wechselbrücke, einem Nahverkehrs-LKW, einem Seefrachtcontainer, einem Luftfrachtcontainer ausgebildet sein. Ferner kann der Frachtraum von einer Palette oder einem weiteren Ladehilfsmittel, wie beispielsweise Gitterboxen, ausgebildet sein.

Das Verfahren umfasst den Schritt: Empfangen einer Abbildung des Frachtraums aus einer Öffnungsperspektive. Die Abbildung umfasst unter anderem den Frachtraumanfang, da dieser basierend auf der Abbildung bestimmt wird. Die Abbildung kann insbesondere eine zweidimensionale Abbildung des Frachtraums sein. Die Abbildung kann ferner ein RGB-Bild sein. Darüber hinaus kann die Abbildung ein aus zwei oder mehreren zweidimensionalen Bildern zusammengesetzte Abbildung und/oder eine dreidimensionale Abbildung sein. Ferner kann die Abbildung eine dreidimensionale Abbildung sein. Die Abbildung kann farbig, schwarz-weiß oder grautönig sein.

Unter einer Öffnungsperspektive ist insbesondere eine Perspektive zu verstehen, die durch eine Öffnung des Frachtraums in das Innere des Frachtraums so ausgerichtet ist, dass, unter Vernachlässigung von im Frachtraum befindlichen Packstücken, der gesamte Frachtraum von der Abbildung umfasst ist. Insbesondere ist die Öffnungsperspektive eine Perspektive, die den Frachtraumanfang und den Frachtraum als solchen umfasst. Beispielsweise kann die Öffnungsperspektive so gewählt werden, dass diese den Frachtraumanfang, einen Boden, eine Decke, zwei Seiten und, falls nicht durch Packstücke verdeckt, ein Frachtraumende umfasst. Das Frachtraumende kann beispielsweise eine Rückseite des Frachtraums sein.

Unter dem Empfang einer Abbildung des Frachtraums ist insbesondere zu verstehen, dass Daten repräsentierend die Abbildung des Frachtraums empfangen werden. Es kann sich daher insbesondere um einen Abbildungsdatensatz, um Abbildungsdaten oder ähnliches handeln.

Die Tiefeninformation repräsentiert insbesondere Tiefen des Frachtraums ausgehend von dem Frachtraumanfang. Für einen leeren 40 Fuß Container würde die Tiefeninformation für jeden Pixel oder jeden definierten Querschnittsbereich eine Tiefe von 40 Fuß angeben. Sobald Packstücke in dem Frachtraum enthalten sind, sind für bestimmte Pixel und/oder Querschnittsbereiche Tiefen von weniger als 40 Fuß anzugeben, nämlich nur die Entfernung von dem Frachtraumanfang bis zu dem Packstück.

Das Verfahren umfasst vorzugsweise den Schritt: Bestimmen der Tiefeninformation basierend auf der Abbildung mit dem ersten trainierten neuronalen Netz. Das erste neuronale Netz ist insbesondere dazu trainiert, von der Abbildung auf die Tiefeninformation zu schließen. Das Verfahren zum Trainieren des ersten neuronalen Netzes wird im Folgenden noch näher beschrieben. Bei dem untrainierten neuronalen Netz kann es sich um ein handelsübliches neuronales Netz handeln.

Die Tiefeninformation hat im Gegensatz zu der Abbildung, beispielsweise dem RGB-Kamerabild, für jeden Pixel oder jeden Querschnittsbereich einen Distanzwert, beispielsweise in Metern, hinterlegt. Durch diese Distanzwerte können aus der Tiefeninformation Entfernungen extrahiert werden, insbesondere in drei Raumrichtungen.

Derartige trainierte neuronale Netze zur Ermittlung von Tiefeninformationen auf Basis von Abbildungen, insbesondere zweidimensionalen Abbildungen, werden auch als Depth Estimation bezeichnet. Im Detail wird zwischen Tiefenschätzung auf Basis von einem Bild (Monocular Depth Estimation), auf Basis von zwei Bildern (Stereo Depth Estimation) und auf Basis von mehreren Eingangsbildern (Multi-View Depth Estimation) unterschieden.

Eine Klasse neuronaler Netze geht noch einen Schritt über die Tiefenbildschätzung hinaus. Hier wird auf Basis von einem oder mehreren Bildern direkt eine 3D Punktewolke geschätzt. Diese Verfahren werden mit Monocular / Multi-View 3D bezeichnet. Ein umfassender Begriff für Verfahren, die die Form von realen Objekten auf Basis von Bildern schätzen ist 3D Reconstruction.

In einer bevorzugten Ausführungsvariante des Verfahrens ist vorgesehen, dass dieses den Schritt umfasst: Bereitstellen des ersten trainierten neuronalen Netzes.

Das Verfahren umfasst ferner den Schritt: Bestimmen eines Frachtraumanfangs des Frachtraums basierend auf der Abbildung. Der Frachtraumanfang ist insbesondere das öffenbare Ende des Frachtraums. Der Frachtraumanfang kann beispielsweise die vertikal ausgerichtete Ebene sein, die an eine Öffnungstür des Frachtraums angrenzt. Der Frachtraumanfang definiert somit beispielsweise die öffenbare Vorderseite des Frachtraums. Insbesondere ist der Frachtraumanfang als die gegenüberliegende Seite der Rückseite des Frachtraums zu verstehen. Der Frachtraumanfang kann basierend auf der Abbildung, beispielsweise mittels eines Algorithmus, bestimmt werden. Darüber hinaus kann der Frachtraumanfang basierend auf der Abbildung mit einem im Folgenden noch näher beschriebenen zweiten trainierten neuronalen Netz bestimmt werden.

Dass der Frachtraumanfang bestimmt wird, kann auch bedeuten, dass eine Bodenfläche des Frachtraums basierend auf der Punktewolke und/oder dem Tiefenbild detektiert wird. Somit kann basierend auf der Tiefeninformation, insbesondere der Punktewolke und/oder dem Tiefenbild, und der Bodenfläche die freie Ladekapazität im Sinne einer freien Bodenfläche ermittelt werden.

Darüber hinaus umfasst das Verfahren den Schritt: Ermitteln der zur Verfügung stehenden Ladekapazität basierend auf der Tiefeninformation und dem Frachtraumanfang. Auf Basis des Frachtraumanfangs und der in der Tiefeninformation hinterlegten Informationen, wie viele Meter vom Frachtraumanfang hin zu der Rückwand oder zu bereits in dem Frachtraum befindlichen Packstücken besteht, kann die zur Verfügung stehende Ladekapazität ermittelt werden. Hierbei kann einerseits die zur Verfügung stehende Ladefläche auf dem Boden des Frachtraums ermittelt werden, jedoch auch solche Flächen und Volumina, die sich nicht auf dem Boden des Frachtraums befinden, sondern sich beispielsweise in einer Ebene zwischen dem Frachtraumboden und der Frachtraumdecke befinden.

In einer bevorzugten Ausführungsvariante des Verfahrens ist vorgesehen, dass das erste neuronale Netz basierend auf einem Trainingsdatensatz trainiert ist, der erste Trainingsdatensatz eine Vielzahl an Trainingsinformationspaaren repräsentiert, und jedes Trainingsinformationspaar eine Trainingsabbildung und eine korrespondierende Trainingstiefeninformation eines Frachtraums umfasst.

Die Trainingsabbildung kann insbesondere ein RGB-Trainingsbild oder ähnliches sein. In Bezug auf die Trainingsabbildung gilt im Wesentlichen die vorherige Beschreibung betreffend die Merkmale der Abbildung des Frachtraums. Die Trainingstiefeninformation kann ein Trainingstiefenbild und/oder eine Trainingspunktewolke sein. Das korrespondierende Trainingstiefenbild zeigt beispielsweise genau die gleiche Situation des Frachtraums wie die entsprechende Trainingsabbildung. Somit wird das erste neuronale Netz mit den Trainingsabbildungen und der korrespondierenden Trainingstiefeninformation trainiert.

Wenn das erste neuronale Netz trainiert ist, schließt dieses von der Abbildung auf die Tiefeninformation, beispielsweise auf ein Tiefenbild und/oder auf eine Punktewolke, die entsprechende Tiefeninformationen enthalten. Bei dem Trainieren wird dem ersten neuronalen Netz die Eingangsgröße, nämlich die Trainingsabbildung, und die Ausgangsgröße, nämlich die Trainingstiefeninformation, vorgegeben, sodass sich das neuronale Netz derart konfigurieren kann, dass dieses von einer Abbildung zu einer entsprechenden Tiefeninformation schließen kann. Es ist bevorzugt, dass die Trainingsabbildungen und die korrespondierende Trainingstiefeninformation von unterschiedlichen Frachträumen und von unterschiedlichen Beladungssituationen der Frachträume erfasst werden.

In einer weiteren bevorzugten Ausführungsvariante des Verfahrens ist vorgesehen, dass basierend auf der bestimmten Tiefeninformation, insbesondere dem bestimmten Tiefenbild, eine Punktewolke erzeugt wird, die x-, y- und/oder z-Distanzwerte, ausgehend von dem Frachtraumanfang, aufweist, und wobei die zur Verfügung stehende Ladekapazität weiter basierend auf der Punktewolke ermittelt wird. Alternativ kann basierend auf der Abbildung mit dem ersten trainierten neuronalen Netz direkt eine Punktewolke bestimmt werden, die die Tiefeninformation enthält bzw. aus der die Tiefeninformation erhalten werden kann. In diesem Fall ist die Tiefeninformation als eine Punktewolke ausgeprägt.

Diese Ausführungsvariante sieht vor, dass die Punktwolke in einem zweiten Schritt erzeugt wird, beispielsweise basierend auf dem Tiefenbild. Die Punktewolke wird in dieser Ausführungsvariante insbesondere nicht unmittelbar basierend auf der Abbildung erzeugt. Die Anzahl der Distanzwerte in der Punktewolke entspricht beispielsweise der Anzahl an Distanzwerten im Tiefenbild. Mittels einer solchen Punktewolke können Distanzwerte des Frachtraums auf wenige Millimeter genau bestimmt werden. Die Punktewolke kann beispielsweise eine 3D-Skulptur darstellen.

Bei einer weiteren bevorzugten Ausführungsvariante des Verfahrens ist vorgesehen, dass der Frachtraumanfang basierend auf der Abbildung mit einem zweiten trainierten neuronalen Netz bestimmt wird, wobei das zweite neuronale Netz dazu trainiert ist, von der Abbildung auf den Frachtraumanfang zu schließen.

Die Bestimmung des Frachtraumanfangs ist wesentlich, da die Ladekapazität von diesem abhängig ist. Mit dem zweiten trainierten neuronalen Netz kann der Frachtraumanfang in vorteilhafter Weise bestimmt werden, da dieser anhand der ohnehin verfügbaren Abbildung bestimmt wird. Somit ist keine zusätzliche manuelle Tätigkeit zur Bestimmung des Frachtraumanfangs erforderlich.

Der Frachtraumanfang kann beispielsweise direkt aus der Abbildung, insbesondere aus dem zweidimensionalen Bild, ermittelt werden. Darüber hinaus kann das zweite trainierte neuronale Netz dazu ausgebildet sein, eine Flächensegmentierung des Frachtraums durchzuführen, insbesondere zur Erkennung einer Decke, eines Bodens, der Seiten, sodass anhand des Anfangs dieser Flächen der Frachtraumanfang bestimmbar ist.

In einer weiteren bevorzugten Ausführungsvariante des Verfahrens ist vorgesehen, dass das zweite neuronale Netz basierend auf einem zweiten Trainingsdatensatz trainiert ist, und der zweite Trainingsdatensatz eine Vielzahl an Trainingsbildern repräsentiert, die jeweils einen annotierten Frachtraumanfang eines Frachtraums zeigen.

Die Annotation in den Trainingsbildern kann beispielsweise ein manuell eingezeichneter Frachtraumanfang sein. Anhand dieses manuell eingezeichneten Frachtraumanfangs kann das neuronale Netz derart konfiguriert werden, dass dieses anhand von Abbildungen auf den Frachtraumanfang schließen kann.

In einer weiteren bevorzugten Ausführungsvariante des Verfahrens umfasst dieses den Schritt: Erzeugen der Abbildung des Frachtraums aus der Öffnungsperspektive mit einer Kamera. Dieser Schritt kann computerimplementiert oder nichtcomputerimplementiert ausgebildet sein. Die Kamera ist vorzugsweise eine mobile Kamera, die beispielsweise von einem Benutzer oder einem Roboter bedient wird. Ferner kann die Kamera beispielsweise fest an einer Laderampe befestigt sein. Es ist ferner bevorzugt, dass die Kamera ein Smartphone und/oder ein Tablet ist oder von diesem umfasst ist.

Gemäß einem weiteren Aspekt wird die eingangs genannte Aufgabe gelöst durch ein Verfahren zum Trainieren eines ersten neuronalen Netzes, das zum Bestimmen einer Tiefeninformation basierend auf einer Abbildung eines Frachtraums verwendet wird, umfassend die Schritte: Empfangen eines ersten Trainingsdatensatzes, insbesondere eines Trainingsbilddatensatzes, wobei der erste Trainingsdatensatz eine Vielzahl an Trainingsinformationspaaren, insbesondere Trainingsbildpaaren, repräsentiert, wobei jedes Trainingsinformationspaar eine Trainingsabbildung und eine korrespondierende Trainingstiefeninformation, insbesondere ein Trainingstiefenbild und/oder eine Trainingspunktewolke, eines Frachtraums umfasst und Trainieren des ersten neuronalen Netzes basierend auf dem ersten Trainingsdatensatz derart, dass basierend auf einer Abbildung eines Frachtraums eine Tiefeninformation des Frachtraums bestimmbar ist.

Das Verfahren zum Trainieren des ersten neuronalen Netzes ist insbesondere computer-implementiert ausgebildet. Der erste Trainingsdatensatz umfasst eine Vielzahl an Trainingsinformationspaaren. Ein einzelnes Trainingsinformationspaar umfasst eine Trainingsabbildung und eine korrespondierende Trainingstiefeninformation.

Die Trainingsabbildung kann eine RGB-Abbildung des Frachtraums sein. Die Trainingstiefeninformation repräsentiert, wie im Vorherigen bereits beschrieben, die Tiefen und vorzugsweise die Breiten und Höhen des Frachtraums. Dass die Trainingstiefeninformation korrespondierend zu der Trainingsabbildung ist, bedeutet insbesondere, dass diese den gleichen Frachtraum, insbesondere aus der gleichen Perspektive, darstellen.

Das erste neuronale Netz wird basierend auf dem ersten Trainingsdatensatz derart trainiert, dass basierend auf einer Abbildung eines Frachtraums eine Tiefeninformation des Frachtraums bestimmbar ist. Hierfür werden insbesondere dem ersten neuronalen Netz die Trainingsabbildungen als Eingangsgröße und die Trainingstiefeninformationen als Ausgangsgröße bereitgestellt, sodass sich das neuronale Netz basierend auf den Eingangsgrößen und basierend auf den Ausgangsgrößen entsprechend der im Vorherigen beschriebenen Funktionen konfigurieren kann. Es ist bevorzugt, dass der erste Trainingsdatensatz mehr als 100 Trainingsinformationspaare aufweist.

Es kann bevorzugt sein, dass das erste neuronale Netz für eine Vielzahl an unterschiedlichen Frachträumen trainiert wird. Alternativ kann das erste neuronale Netz auch für eine bestimmte Art an Frachträumen konfiguriert werden, beispielsweise für einen LKW-Frachtraum oder den Frachtraum eines 20-Fuß-Containers.

Es ist bevorzugt, dass für jedes Pixel der Trainingsabbildung ein Tiefenwert durch das korrespondierende Trainingstiefenbild bereitgestellt wird, wodurch das erste neuronale Netz nach dem Trainieren von der Pixelausbildung auf die Tiefe schließen kann.

In einer bevorzugten Ausführungsvariante des Verfahrens zum Trainieren des ersten neuronalen Netzes ist vorgesehen, dass das Trainingsinformationspaar aus zwei oder mehr Trainingsabbildungen und/oder aus zwei oder mehr korrespondierenden Trainingstiefeninformationen zusammengesetzt ist, und die Trainingsabbildungen und die korrespondierenden Trainingstiefeninformationen jeweils aus mindestens zwei unterschiedlichen Perspektiven erfasst werden.

Um eine weitere Verbesserung des ersten neuronalen Netzes zu erreichen, kann das Trainingsinformationspaar um weitere Trainingsabbildungen und/oder Trainingstiefeninformationen ergänzt werden. Insbesondere kann eine erweiterte Trainingsabbildung durch Überlagerung von zwei oder mehr Trainingsabbildungen und/oder eine erweiterte Trainingstiefeninformation mit zwei oder mehr Trainingstiefeninformationen bei dem Training verwendet werden. Durch die Verwendung von zwei oder mehr Trainingsabbildungen und/oder zwei oder mehr korrespondierenden Trainingstiefeninformationen kann eine dichtere Punktewolke mit dem ersten neuronalen Netz generiert werden, sodass eine präzisere Ermittlung der zur Verfügung stehenden Ladekapazität ermöglicht wird. Ferner kann der Fehler dadurch reduziert werden.

In einer weiteren bevorzugten Ausführungsvariante des Verfahrens zum Trainieren des ersten neuronalen Netzes ist vorgesehen, dass das Trainingsinformationspaar mit einem mobilen Sensorsystem erfasst wird, wobei das mobile Sensorsystem eine Kamera zur Erfassung der Trainingsabbildung und einen Tiefensensor zur Erfassung der Trainingstiefeninformation aufweist.

Die Erfassung des Trainingsinformationspaares mit dem mobilen Sensorsystem hat den Vorteil, dass keine festen Sensorsysteme in den Frachträumen zu montieren sind. Das mobile Sensorsystem ist insbesondere unabhängig von dem Frachtraum beziehungsweise unabhängig von dem den Frachtraum aufweisenden Fahrzeug.

Es ist insbesondere bevorzugt, dass die Kamera und der Tiefensensor einen festen Abstand zueinander aufweisen. Der Tiefensensor kann beispielsweise ein LIDAR-Sensor sein.

In einer weiteren bevorzugten Ausführungsvariante des Verfahrens zum Trainieren des ersten neuronalen Netzes ist vorgesehen, dass dieses den Schritt umfasst: Testen des trainierten ersten neuronalen Netzes mittels Bestimmung eines Fehlers zwischen einer mit dem ersten neuronalen Netz bestimmten Tiefe in einer Trainingsabbildung und einer tatsächlichen Tiefe einer korrespondierenden Trainingstiefeninformation. Der Fehler kann beispielsweise als ein quadratischer Fehler bestimmt werden.

Der Fehler wird vorzugsweise an das erste neuronale Netz zurückgegeben. Mit einer Verlustfunktion und/oder einem Verlustwert wird das neuronale Netz vorzugsweise optimiert. Der Verlustwert basiert insbesondere auf dem Fehler.

Gemäß einem weiteren Aspekt wird die eingangs genannte Aufgabe gelöst durch ein Verfahren zum Trainieren eines zweiten neuronalen Netzes, das zum Bestimmen eines Frachtraumanfangs eines Frachtraums basierend auf einer Abbildung des Frachtraums verwendet wird, umfassend die Schritte: Empfangen eines zweiten Trainingsdatensatzes, insbesondere eines zweiten Trainingsbilddatensatzes, wobei der zweite Trainingsdatensatz eine Vielzahl an Trainingsbildern repräsentiert, die jeweils einen annotierten Frachtraumanfang eines Frachtraums zeigen; Trainieren des zweiten neuronalen Netzes basierend auf dem zweiten Trainingsdatensatz derart, dass basierend auf einer Abbildung eines Frachtraums ein Frachtraumanfang des Frachtraums bestimmbar ist.

Der Frachtraumanfang kann in den Trainingsbildern manuell eingezeichnet werden, bevor diese zum Trainieren des zweiten neuronalen Netzes verwendet werden. Anhand dieses manuell eingezeichneten Frachtraumanfangs kann das neuronale Netz derart konfiguriert werden, dass dieses anhand von Abbildungen auf den Frachtraumanfang schließen kann.

Es ist bevorzugt, dass der zweite Trainingsdatensatz für jede Darstellung des Frachtraums zwei oder mehr Trainingsbilder aufweist, die jeweils einen annotierten Frachtraumanfang umfassen, um das Trainieren des zweiten neuronalen Netzes zu verbessern, sodass der Fehler des zweiten neuronalen Netzes reduziert ist.

Gemäß einem weiteren Aspekt wird die eingangs genannte Aufgabe gelöst durch ein Verfahren zum Beladen eines Frachtraums, umfassend die Schritte: erstes Beladen des Frachtraums; Erhalten einer Information repräsentierend eine zur Verfügung stehende Ladekapazität ermittelt mit einem Verfahren zur Ermittlung einer zur Verfügung stehenden Ladekapazität eines Frachtraums nach einer der im Vorherigen beschriebenen Ausführungsvarianten und/oder mit einem ersten neuronalen Netz trainiert mit einem Verfahren nach einer der im Vorherigen beschriebenen Ausführungsvarianten; zweites Beladen des Frachtraums, wenn ein Bedarf nach zusätzlicher Ladekapazität besteht, sodass die zur Verfügung stehende Ladekapazität zumindest teilweise verwendet wird.

Ergänzend kann auch ein drittes, viertes oder häufigeres Beladen erfolgen. Insbesondere ist es bevorzugt, dass zwischen den weiteren Beladungsvorgängen die zur Verfügung stehende Ladekapazität gemäß dem im Vorherigen beschriebenen Verfahren bestimmt wird.

Gemäß einem weiteren Aspekt wird die eingangs genannte Aufgabe gelöst durch ein System zur Datenverarbeitung, umfassend Mittel zur Ausführung der Schritte des Verfahrens zur Ermittlung einer zur Verfügung stehenden Ladekapazität eines Frachtraums nach einer der im Vorherigen beschriebenen Ausführungsvarianten, des Verfahrens zum Trainieren eines ersten neuronalen Netzes nach einer der im Vorherigen beschriebenen Ausführungsvarianten und/oder des Verfahrens zum Trainieren eines zweiten neuronalen Netzes nach einer der im Vorherigen beschriebenen Ausführungsvarianten.

Das System zur Datenverarbeitung kann eine Kamera zum Erzeugen der Abbildung des Frachtraums aus der Öffnungsperspektive aufweisen oder mit einer solchen Kamera koppelbar sein. Darüber hinaus kann das System zur Datenverarbeitung ein mobiles Sensorsystem zur Erfassung eines Trainingsinformationspaares aufweisen oder mit einem solchen mobilen Sensorsystem koppelbar sein.

Gemäß einem weiteren Aspekt wird die eingangs genannte Aufgabe gelöst durch ein Computerprogramm, umfassend Befehle, die bei der Ausführung des Programms durch einen Computer diesen veranlassen, das Verfahren zur Ermittlung einer zur Verfügung stehenden Ladekapazität eines Frachtraums nach einer der im Vorherigen beschriebenen Ausführungsvarianten, das Verfahren zum Trainieren eines ersten neuronalen Netzes nach einer der im Vorherigen beschriebenen Ausführungsvarianten und/oder das Verfahren zum Trainieren eines zweiten neuronalen Netzes nach einer der im Vorherigen beschriebenen Ausführungsvarianten auszuführen.

Vorzugsweise umfasst das Computerprogramm auch Befehle, um Vorrichtungen und/oder Mittel zu veranlassen, Teilschritte der im Vorherigen genannten Verfahren auszuführen. Ferner können einzelne Schritte der im Vorherigen beschriebenen Verfahren von dem Computerprogramm nicht oder lediglich teilweise durchgeführt werden, beispielsweise das Erzeugen der Abbildung des Frachtraums aus der Öffnungsperspektive mit einer Kamera.

Gemäß einem weiteren Aspekt wird die eingangs genannte Aufgabe gelöst durch einen computerlesbaren Datenträger, umfassend Befehle, die bei der Ausführung durch einen Computer diesen veranlassen, das Verfahren zur Ermittlung einer zur Verfügung stehenden Ladekapazität eines Frachtraums nach einer der im Vorherigen beschriebenen Ausführungsvarianten, das Verfahren zum Trainieren eines ersten neuronalen Netzes nach einer der im Vorherigen beschriebenen Ausführungsvarianten und/oder das Verfahren zum Trainieren eines zweiten neuronalen Netzes nach einer der im Vorherigen beschriebenen Ausführungsvarianten auszuführen.

Vorzugsweise umfasst der computerlesbare Datenträger auch Befehle, um Vorrichtungen und/oder Mittel zu veranlassen, Teilschritte der im Vorherigen genannten Verfahren auszuführen. Ferner können einzelne Schritte der im Vorherigen beschriebenen Verfahren von den Befehlen des computerlesbaren Datenträgers nicht oder lediglich teilweise durchgeführt werden, beispielsweise das Erzeugen der Abbildung des Frachtraums aus der Öffnungsperspektive mit einer Kamera.

Für weitere Vorteile, Ausführungsvarianten und Ausführungsdetails der einzelnen Aspekte und ihrer möglichen Fortbildungen wird auch auf die erfolgte Beschreibung zu den weiteren Aspekten, den entsprechenden Merkmalen und Fortbildungen verwiesen.

Bevorzugte Ausführungsbeispiele werden exemplarisch anhand der beiliegenden Figuren erläutert. Es zeigen:
- Figur 1:: eine schematische Ansicht einer beispielhaften Ausführungsform eines computerimplementierten Verfahrens zur Ermittlung einer zur Verfügung stehenden Ladekapazität eines Frachtraums;
- Figur 2:: eine schematische Ansicht einer beispielhaften Ausführungsform eines Verfahrens zum Trainieren eines ersten neuronalen Netzes, das zum Bestimmen einer Tiefeninformation basierend auf einer Abbildung eines Frachtraums verwendet wird;
- Figur 3:: eine schematische Ansicht einer beispielhaften Ausführungsform eines Verfahrens zum Trainieren eines zweiten neuronalen Netzes, das zum Bestimmen eines Frachtraumanfangs eines Frachtraums basierend auf einer Abbildung des Frachtraums verwendet wird;
- Figur 4:: eine schematische Ansicht einer beispielhaften Ausführungsform eines Verfahrens zum Beladen eines Frachtraums;
- Figur 5:: eine schematische Ansicht einer beispielhaften Ausführungsform eines Systems zur Datenverarbeitung;
- Figur 6:: eine beispielhafte Abbildung eines Frachtraums;
- Figur 7:: ein korrespondierendes Tiefenbild des in Figur 6 gezeigten Frachtraums;
- Figur 8:: eine schematische Ansicht einer Punktewolke des in Figur 6 gezeigten Frachtraums;
- Figur 9:: eine schematische Seitenansicht der in Figur 8 gezeigten Punktewolke.

In den Figuren sind gleiche oder im Wesentlichen funktionsgleiche beziehungsweise -ähnliche Elemente mit den gleichen Bezugszeichen bezeichnet.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

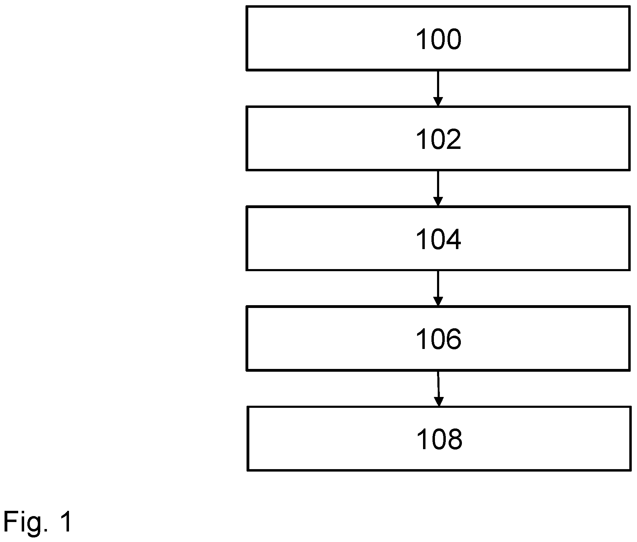

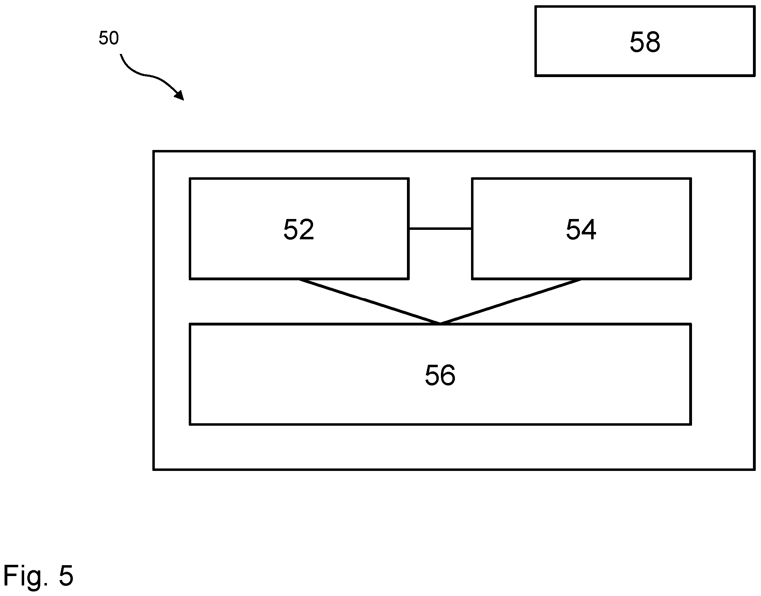

Figur 1 zeigt ein computerimplementiertes Verfahren zur Ermittlung einer zur Verfügung stehenden Ladekapazität 8 eines Frachtraums 4. In Schritt 100 wird die Abbildung 1 des Frachtraums 4 aus der Öffnungsperspektive mit einer Kamera 58 erzeugt. In Schritt 102 wird diese Abbildung 1 des Frachtraums 4 aus der Öffnungsperspektive empfangen, beispielsweise durch eine Kommunikationseinheit 56 eines Systems zur Datenverarbeitung 50, wie es in Figur 5 gezeigt ist.

In Schritt 104 wird eine Tiefeninformation 14 basierend auf der Abbildung 1 mit einem ersten trainierten neuronalen Netz bestimmt. Das erste neuronale Netz ist dazu trainiert, von der Abbildung 1 auf die Tiefeninformation 14 zu schließen. In Schritt 106 wird ein Frachtraumanfang 6 des Frachtraums 4 basierend auf der Abbildung 1, bestimmt. Dies kann beispielsweise mit einem zweiten neuronalen Netz erfolgen, das dazu trainiert ist, in der Abbildung 1 den Frachtraumanfang 6 zu erkennen.

In Schritt 108 wird die zur Verfügung stehende Ladekapazität 8 basierend auf der Tiefeninformation 14 und dem Frachtraumanfang 6 ermittelt.

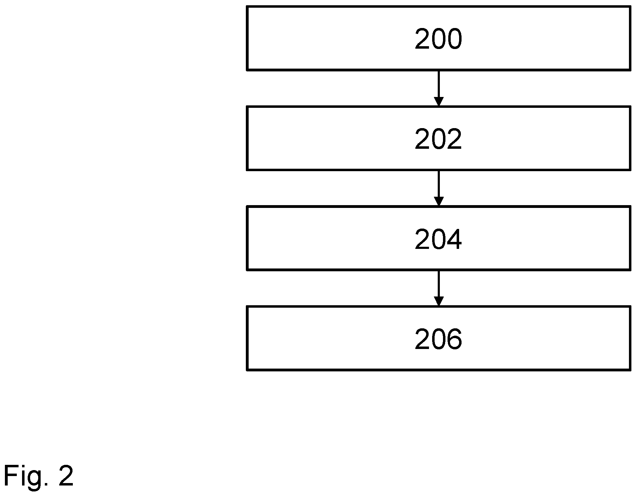

Figur 2 zeigt ein Verfahren zum Trainieren eines ersten neuronalen Netzes, das zum Bestimmen der Tiefeninformation 14 basierend auf der Abbildung 1 des Frachtraums 4 verwendet wird. Das Verfahren umfasst den Schritt 200, in dem ein Trainingsinformationspaar mit einem mobilen Sensorsystem erfasst wird. Das mobile Sensorsystem weist eine Kamera zur Erfassung der Trainingsabbildung und einen Tiefensensor zur Erfassung der Trainingstiefeninformation auf.

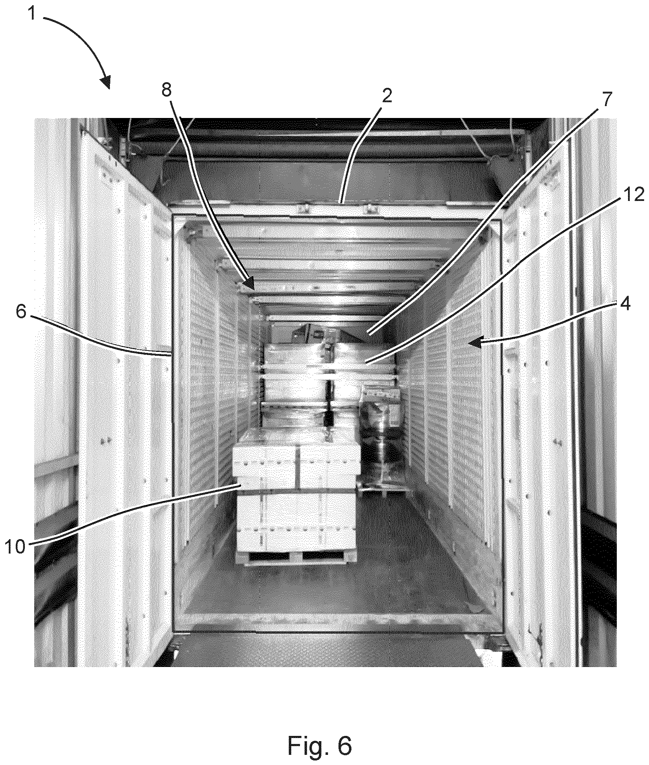

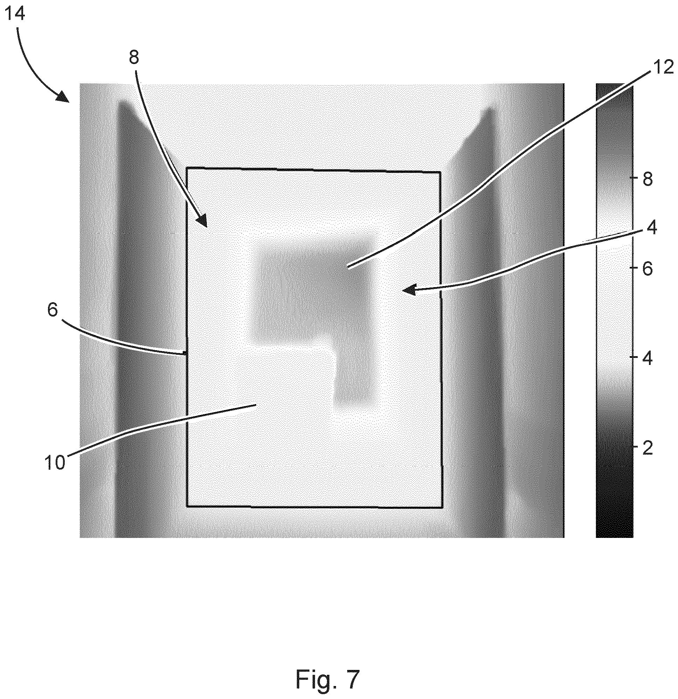

In Schritt 202 wird ein erster Trainingsdatensatz empfangen. Der erste Trainingsdatensatz repräsentiert eine Vielzahl an Trainingsinformationspaaren. Ein Trainingsinformationspaar umfasst eine Trainingsabbildung, vergleichbar mit der in Figur 6 gezeigten Abbildung, und eine korrespondierende Trainingstiefeninformation, beispielsweise ein korrespondierendes Trainingstiefenbild, vergleichbar mit der in Figur 7 gezeigten Darstellung, eines Frachtraums 4.

In Schritt 204 wird das erste neuronale Netz basierend auf dem ersten Trainingsdatensatz, derart trainiert, dass basierend auf der Abbildung 1 des Frachtraums 4 eine Tiefeninformation des Frachtraums 4 bestimmbar ist.

Die Abbildung in Figur 7 wird im Zuge der vorliegenden Beschreibung in zweifacher Weise verwendet. Zum einen kann diese Darstellung ein mit einem Tiefensensor aufgenommenes Tiefenbild darstellen, welches als ein Trainingstiefenbild verwendbar ist. Zum anderen kann dieses ein mit dem ersten neuronalen Netz bestimmtes Tiefenbild darstellen.

In Schritt 206 wird das erste neuronale Netz mittels Bestimmen eines Fehlers zwischen einer mit dem ersten neuronalen Netz bestimmen Tiefe in einer Trainingsabbildung und einer tatsächlichen Tiefe einer korrespondierenden Trainingstiefeninformation getestet. Der Fehler kann beispielsweise ein quadratischer Fehler sein.

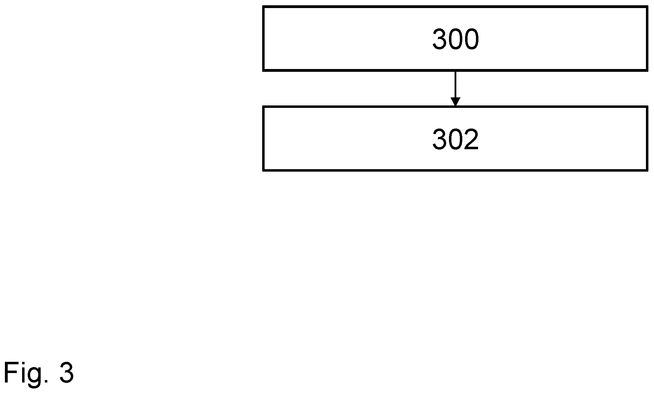

In Figur 3 ist ein Verfahren zum Trainieren eines zweiten neuronalen Netzes gezeigt. Das zweite neuronale Netz ist zum Bestimmen des Frachtraumanfangs 6 des Frachtraums 4 basierend auf einer Abbildung 1 des Frachtraums 4 ausgebildet. Das Verfahren umfasst den Schritt 300, in dem ein zweiter Trainingsdatensatz empfangen wird. Der zweite Trainingsdatensatz repräsentiert eine Vielzahl an Trainingsbildern. Die Vielzahl an Trainingsbildern zeigt jeweils einen annotierten Frachtraumanfang eines Frachtraums. Dies bedeutet beispielsweise, dass der Frachtraumanfang in die Abbildung 1 eingezeichnet ist, wie es auch in Figur 6 gezeigt ist.

In Schritt 302 wird das zweite neuronale Netz basierend auf dem zweiten Trainingsdatensatz derart trainiert, dass basierend auf der Abbildung 1 des Frachtraums 4 der Frachtraumanfang 6 des Frachtraums 4 bestimmbar ist.

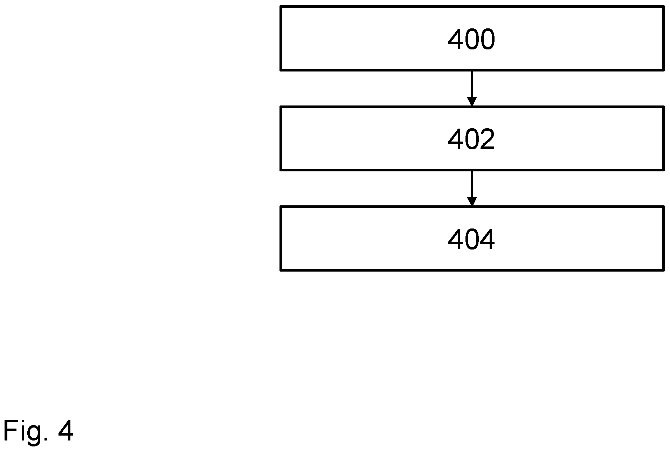

Figur 4 zeigt ein Verfahren zum Beladen eines Frachtraums 4. In Schritt 400 wird der Frachtraum 4 zum ersten Mal mit Frachtgut 10, 12 beladen. In Schritt 402 wird eine zur Verfügung stehende Ladekapazität 8 beispielsweise mit dem in Figur 1 gezeigten Verfahren ermittelt.

Im Schritt 404 wird der Frachtraum 4 ein zweites Mal beladen, wenn ein Bedarf nach zusätzlicher Ladekapazität besteht, sodass die zur Verfügung stehende Ladekapazität 8 zumindest teilweise ausgenutzt wird. Der Schritt 404 entfällt, wenn in Schritt 402 keine zur Verfügung stehende Ladekapazität ermittelbar ist, weil der Frachtraum 4 bereits vollständig gefüllt ist.

Figur 5 zeigt ein System zur Datenverarbeitung 50. Das System 50 umfasst einen Prozessor 52, einen Speicher 54 und eine Kommunikationseinheit 56. Der Prozessor 52, der Speicher 54 und/oder die Kommunikationseinheit 56 sind ein Mittel zur Ausführung der Schritte des Verfahrens zur Ermittlung der zur Verfügung stehenden Ladekapazität 8 des Frachtraums 4 und/oder der Verfahren zum Trainieren des ersten neuronalen Netzes und/oder des zweiten neuronalen Netzes.

Der Prozessor 52 kann auch als ein Computer ausgebildet sein. In dem Speicher 54 kann beispielsweise das im Vorherigen beschriebene Computerprogramm gespeichert sein. Der Speicher kann ferner ein computerlesbarer Datenträger sein. Mit der Kommunikationseinheit 56 können insbesondere Daten empfangen werden, beispielsweise solche, die eine Abbildung eines Frachtraums 4 oder Trainingsbilddatensätze repräsentieren. Mit der Kamera 58 können Abbildungen 1 von Frachträumen erfasst werden. Die Kamera 58 ist vorzugsweise signaltechnisch mit dem System 50 zur Datenverarbeitung verbindbar.

Figur 6 zeigt die im Vorherigen bereits beschriebene Abbildung 1 des Frachtraums 4. Der Frachtraum 4 erstreckt sich von einem Frachtraumanfang 6 zu einem Frachtraumende 7. Der Frachtraum 4 weist ein Frachtvolumen auf. Die Ladekapazität 8 ist das Frachtvolumen abzüglich des Volumens der bereits in dem Frachtraum 4 angeordneten Frachtgüter 10, 12.

In Figur 7 ist eine Tiefeninformation 14 des in Figur 6 gezeigten Frachtraums 4 dargestellt. Die Tiefeninformation 14 kann entweder mit einem Tiefensensor erfasst werden und so beispielsweise als Tiefentrainingsbild verwendet werden. Alternativ kann die Tiefeninformation 14 mit einem ersten neuronalen Netz basierend auf der Abbildung 1 aus Figur 6 bestimmt werden.

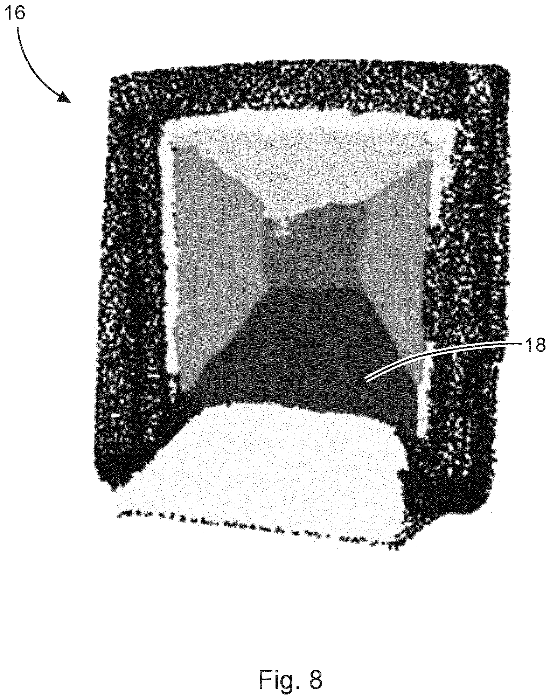

In Figur 8 ist eine Punktewolke 16 gezeigt, mit der die Ladekapazität 8 bestimmbar ist. Beispielsweise ist hier die Ladefläche 18 als eine mögliche Größe der Ladekapazität 8 hervorgehoben.

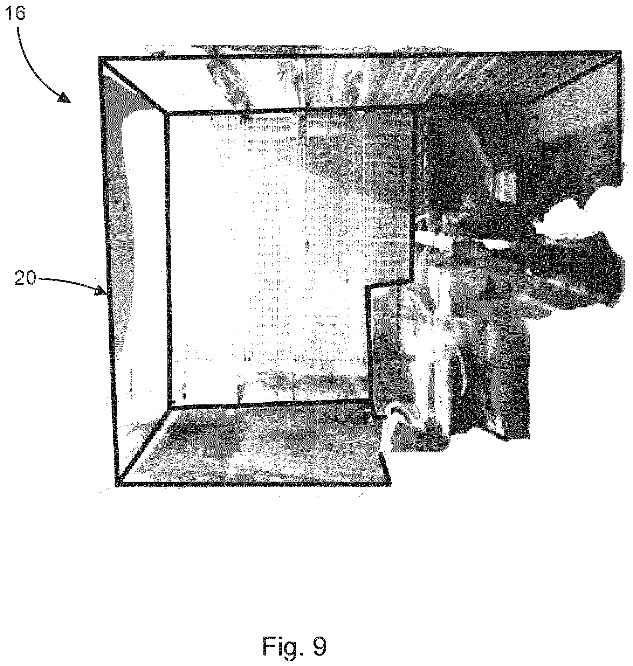

In Figur 9 ist eine seitliche Ansicht der Punktewolke 16 gezeigt und ein Ladevolumen 20 hervorgehoben.

Die im Vorherigen beschriebenen Verfahren und korrespondierenden Systeme, Computerprogramme und computerlesbaren Datenträger haben den Vorteil, dass eine Ladekapazität 8 mit einer einzelnen Abbildung 1 eines Frachtraums 4 bestimmbar ist. Hierfür kann beispielsweise ein einfaches RGB-Bild verwendet werden, wie es beispielsweise mit einem Smartphone oder einem Tablet erfassbar ist. Da in der Logistik üblicherweise bereits Tablets und Smartphones eingesetzt werden, besteht somit kein weiterer Investitionsbedarf.

Die Laderaumoptimierung kann so anhand der ermittelbaren Ladekapazität, insbesondere ein Lademeter, eine Ladefläche und/oder ein Ladevolumen, besser durchgeführt werden. Somit kann auf einfachste Art und Weise, nämlich durch die Aufnahme eines RGB-Bilds 1, die zur Verfügung stehende Ladekapazität ermittelt werden. Dadurch besteht die Möglichkeit, dass Frachträume 4 besser ausgelastet werden. Dies führt einerseits zu einer besseren Ressourcenauslastung und somit zu geringeren Kosten für den Betreiber des Frachtraums 4. Darüber hinaus reduziert sich die Anzahl der erforderlichen Frachträume 4 zum Transport von Transportgütern, sodass auch der ökologische Fußabdruck verbessert ist.

### BEZUGSZEICHEN

- 1: Abbildung eines Frachtraums
- 2: Container
- 4: Frachtraum
- 6: Frachtraumanfang
- 7: Frachtraumende
- 8: Ladekapazität
- 10: Frachtgut
- 12: Frachtgut
- 14: Tiefenbild
- 16: Punktewolke
- 18: Ladefläche
- 20: Ladevolumen
- 50: System zur Datenverarbeitung
- 52: Prozessor
- 54: Speicher
- 56: Kommunikationseinheit
- 58: Kamera

## Patentansprüche

1. Computerimplementiertes Verfahren zur Ermittlung einer zur Verfügung stehenden Ladekapazität (8) eines Frachtraums (4), umfassend die Schritte:
- Empfangen (102) einer Abbildung (1) des Frachtraums (4) aus einer Öffnungsperspektive;
- Bestimmen (104) einer Tiefeninformation (14) des Frachtraums basierend auf der Abbildung;
- Bestimmen (106) eines Frachtraumanfangs (6) des Frachtraums (4) basierend auf der Abbildung (1);
- Ermitteln (108) der zur Verfügung stehenden Ladekapazität (8) basierend auf der Tiefeninformation (14) und dem Frachtraumanfang (6).

2. Verfahren nach Anspruch 1, wobei
- die Tiefeninformation basierend auf der Abbildung (1) mit einem ersten trainierten neuronalen Netz bestimmt wird, und
- das erste neuronale Netz dazu trainiert ist, von der Abbildung (1) auf die Tiefeninformation (14) zu schließen.

3. Verfahren nach dem vorherigen Anspruch 2, wobei
- das erste neuronale Netz basierend auf einem Trainingsdatensatz trainiert ist,
- der erste Trainingsdatensatz eine Vielzahl an Trainingsinformationspaaren repräsentiert, und
- jedes Trainingsinformationspaar eine Trainingsabbildung und eine korrespondierende Trainingstiefeninformation eines Frachtraums (4) umfasst.

4. Verfahren nach einem der vorherigen Ansprüche, wobei
- basierend auf der bestimmten Tiefeninformation (14) eine Punktewolke (16) erzeugt wird, die x-, y- und z-Distanzwerte ausgehend von dem Frachtraumanfang (6) aufweist, und
- wobei die zur Verfügung stehende Ladekapazität (8) weiter basierend auf der Punktewolke (16) ermittelt wird.

5. Verfahren nach einem der vorherigen Ansprüche, wobei
- der Frachtraumanfang (6) basierend auf der Abbildung (1) mit einem zweiten trainierten neuronalen Netz bestimmt wird, wobei das zweite neuronale Netz dazu trainiert ist, von der Abbildung (1) auf den Frachtraumanfang (6) zu schließen.

6. Verfahren nach dem vorherigen Anspruch 5, wobei
- das zweite neuronale Netz basierend auf einem zweiten Trainingsdatensatz trainiert ist, und
- der zweite Trainingsdatensatz eine Vielzahl an Trainingsbildern repräsentiert, die jeweils einen annotierten Frachtraumanfang (6) eines Frachtraums (4) zeigen.

7. Verfahren nach einem der vorherigen Ansprüche, umfassend den Schritt:
- Erzeugen (100) der Abbildung (1) des Frachtraums (4) aus der Öffnungsperspektive mit einer Kamera (58).

8. Verfahren zum Trainieren eines ersten neuronalen Netzes, das zum Bestimmen einer Tiefeninformation (14) basierend auf einer Abbildung (1) eines Frachtraums (4) verwendet wird, umfassend die Schritte:
- Empfangen (202) eines ersten Trainingsdatensatzes, wobei der erste Trainingsdatensatz eine Vielzahl an Trainingsinformationspaaren repräsentiert, wobei jedes Trainingsinformationspaar eine Trainingsabbildung und eine korrespondierende Trainingstiefeninformation eines Frachtraums (4) umfasst;
- Trainieren (204) des ersten neuronalen Netzes basierend auf dem ersten Trainingsdatensatz derart, dass basierend auf einer Abbildung (1) eines Frachtraums (4) eine Tiefeninformation (14) des Frachtraums (4) bestimmbar ist.

9. Verfahren nach dem vorherigen Anspruch 8, wobei
- das Trainingsinformationspaar aus zwei oder mehr Trainingsabbildungen und/oder aus zwei oder mehr korrespondierenden Trainingstiefeninformationen zusammengesetzt ist, und
- die Trainingsabbildungen und die korrespondierenden Trainingstiefeninformationen aus mindestens zwei unterschiedlichen Perspektiven erfasst werden.

10. Verfahren nach einem der vorherigen Ansprüche 8-9, wobei
- das Trainingsinformationspaar mit einem mobilen Sensorsystem erfasst wird, wobei das mobile Sensorsystem eine Kamera zur Erfassung der Trainingsabbildung und einen Tiefensensor zur Erfassung der Trainingstiefeninformation aufweist.

11. Verfahren nach einem der vorherigen Ansprüche 8-10, umfassend den Schritt:
- Testen (206) des trainierten ersten neuronalen Netzes mittels Bestimmung eines Fehlers zwischen einer mit dem ersten neuronalen Netz bestimmten Tiefe in einer Trainingsabbildung und einer tatsächlichen Tiefe einer korrespondierenden Trainingstiefeninformation.

12. Verfahren zum Trainieren eines zweiten neuronalen Netzes, das zum Bestimmen eines Frachtraumanfangs (6) eines Frachtraums (4) basierend auf einer Abbildung (1) des Frachtraums (4) verwendet wird, umfassend die Schritte:
- Empfangen (300) eines zweiten Trainingsdatensatzes, wobei der zweite Trainingsdatensatz eine Vielzahl an Trainingsbildern repräsentiert, die jeweils einen annotierten Frachtraumanfang (6) eines Frachtraums (4) zeigen;
- Trainieren (302) des zweiten neuronalen Netzes basierend auf dem zweiten Trainingsdatensatz derart, dass basierend auf einer Abbildung (1) eines Frachtraums (4) ein Frachtraumanfang (6) des Frachtraums (4) bestimmbar ist.

13. Verfahren zum Beladen eines Frachtraums (4), umfassend die Schritte:
- erstes Beladen (400) des Frachtraums (4);
- Erhalten (402) einer Information repräsentierend eine zur Verfügung stehende Ladekapazität (8) ermittelt mit einem Verfahren nach einem der Ansprüche 1-7 und/oder mit einem neuronalen Netz trainiert mit einem Verfahren nach einem der Ansprüche 8-11;
- zweites Beladen (404) des Frachtraums (4), wenn ein Bedarf nach zusätzlicher Ladekapazität (8) besteht, sodass die zur Verfügung stehende Ladekapazität (8) zumindest teilweise verwendet wird.

14. System zur Datenverarbeitung, umfassend Mittel zur Ausführung der Schritte des Verfahrens nach einem der vorherigen Ansprüche 1-7, des Verfahrens nach einem der vorherigen Ansprüche 8-11 und/oder des Verfahrens nach dem vorherigen Anspruch 12.

15. Computerprogramm, umfassend Befehle, die bei der Ausführung des Programms durch einen Computer diesen veranlassen, das Verfahren nach einem der vorherigen Ansprüche 1-7, das Verfahren nach einem der vorherigen Ansprüche 8-11 und/oder das Verfahren nach dem vorherigen Anspruch 12 auszuführen.

16. Computerlesbarer Datenträger, umfassend Befehle, die bei der Ausführung durch einen Computer diesen veranlassen, das Verfahren nach einem der vorherigen Ansprüche 1-7, das Verfahren nach einem der vorherigen Ansprüche 8-11 und/oder das Verfahren nach dem vorherigen Anspruch 12 auszuführen.

## Geänderte Patentansprüche

### Geänderte Patentansprüche gemäss Regel 137(2) EPÜ.

1. Computerimplementiertes Verfahren zur Ermittlung einer zur Verfügung stehenden Ladekapazität (8) eines Frachtraums (4), umfassend die Schritte:
- Empfangen (102) einer Abbildung (1) des Frachtraums (4) aus einer Öffnungsperspektive; **gekennzeichnet durch**:
- Bestimmen (104) einer Tiefeninformation (14) des Frachtraums basierend auf der Abbildung;
- Bestimmen (106) eines Frachtraumanfangs (6) des Frachtraums (4) basierend auf der Abbildung (1);
- Ermitteln (108) der zur Verfügung stehenden Ladekapazität (8) basierend auf der Tiefeninformation (14) und dem Frachtraumanfang (6).

2. Verfahren nach Anspruch 1, wobei
- die Tiefeninformation basierend auf der Abbildung (1) mit einem ersten trainierten neuronalen Netz bestimmt wird, und
- das erste neuronale Netz dazu trainiert ist, von der Abbildung (1) auf die Tiefeninformation (14) zu schließen.

3. Verfahren nach dem vorherigen Anspruch 2, wobei
- das erste neuronale Netz basierend auf einem Trainingsdatensatz trainiert ist,
- der erste Trainingsdatensatz eine Vielzahl an Trainingsinformationspaaren repräsentiert, und
- jedes Trainingsinformationspaar eine Trainingsabbildung und eine korrespondierende Trainingstiefeninformation eines Frachtraums (4) umfasst.

4. Verfahren nach einem der vorherigen Ansprüche, wobei
- basierend auf der bestimmten Tiefeninformation (14) eine Punktewolke (16) erzeugt wird, die x-, y- und z-Distanzwerte ausgehend von dem Frachtraumanfang (6) aufweist, und
- wobei die zur Verfügung stehende Ladekapazität (8) weiter basierend auf der Punktewolke (16) ermittelt wird.

5. Verfahren nach einem der vorherigen Ansprüche, wobei
- der Frachtraumanfang (6) basierend auf der Abbildung (1) mit einem zweiten trainierten neuronalen Netz bestimmt wird, wobei das zweite neuronale Netz dazu trainiert ist, von der Abbildung (1) auf den Frachtraumanfang (6) zu schließen.

6. Verfahren nach dem vorherigen Anspruch 5, wobei
- das zweite neuronale Netz basierend auf einem zweiten Trainingsdatensatz trainiert ist, und
- der zweite Trainingsdatensatz eine Vielzahl an Trainingsbildern repräsentiert, die jeweils einen annotierten Frachtraumanfang (6) eines Frachtraums (4) zeigen.

7. Verfahren nach einem der vorherigen Ansprüche, umfassend den Schritt:
- Erzeugen (100) der Abbildung (1) des Frachtraums (4) aus der Öffnungsperspektive mit einer Kamera (58).

8. Verfahren zum Trainieren eines ersten neuronalen Netzes, das zum Bestimmen einer Tiefeninformation (14) basierend auf einer Abbildung (1) eines Frachtraums (4) verwendet wird, **gekennzeichnet durch** die Schritte:
- Empfangen (202) eines ersten Trainingsdatensatzes, wobei der erste Trainingsdatensatz eine Vielzahl an Trainingsinformationspaaren repräsentiert, wobei jedes Trainingsinformationspaar eine Trainingsabbildung und eine korrespondierende Trainingstiefeninformation eines Frachtraums (4) umfasst;
- Trainieren (204) des ersten neuronalen Netzes basierend auf dem ersten Trainingsdatensatz derart, dass basierend auf einer Abbildung (1) eines Frachtraums (4) eine Tiefeninformation (14) des Frachtraums (4) bestimmbar ist.

9. Verfahren nach dem vorherigen Anspruch 8, wobei
- das Trainingsinformationspaar aus zwei oder mehr Trainingsabbildungen und/oder aus zwei oder mehr korrespondierenden Trainingstiefeninformationen zusammengesetzt ist, und
- die Trainingsabbildungen und die korrespondierenden Trainingstiefeninformationen aus mindestens zwei unterschiedlichen Perspektiven erfasst werden.

10. Verfahren nach einem der vorherigen Ansprüche 8-9, wobei
- das Trainingsinformationspaar mit einem mobilen Sensorsystem erfasst wird, wobei das mobile Sensorsystem eine Kamera zur Erfassung der Trainingsabbildung und einen Tiefensensor zur Erfassung der Trainingstiefeninformation aufweist.

11. Verfahren nach einem der vorherigen Ansprüche 8-10, umfassend den Schritt:
- Testen (206) des trainierten ersten neuronalen Netzes mittels Bestimmung eines Fehlers zwischen einer mit dem ersten neuronalen Netz bestimmten Tiefe in einer Trainingsabbildung und einer tatsächlichen Tiefe einer korrespondierenden Trainingstiefeninformation.

12. Verfahren zum Trainieren eines zweiten neuronalen Netzes, das zum Bestimmen eines Frachtraumanfangs (6) eines Frachtraums (4) basierend auf einer Abbildung (1) des Frachtraums (4) verwendet wird, **gekennzeichnet durch** die Schritte:
- Empfangen (300) eines zweiten Trainingsdatensatzes, wobei der zweite Trainingsdatensatz eine Vielzahl an Trainingsbildern repräsentiert, die jeweils einen annotierten Frachtraumanfang (6) eines Frachtraums (4) zeigen;
- Trainieren (302) des zweiten neuronalen Netzes basierend auf dem zweiten Trainingsdatensatz derart, dass basierend auf einer Abbildung (1) eines Frachtraums (4) ein Frachtraumanfang (6) des Frachtraums (4) bestimmbar ist.

13. Verfahren zum Beladen eines Frachtraums (4), umfassend die Schritte:
- erstes Beladen (400) des Frachtraums (4);
- Erhalten (402) einer Information repräsentierend eine zur Verfügung stehende Ladekapazität (8) ermittelt mit einem Verfahren nach einem der Ansprüche 1-7 und/oder mit einem neuronalen Netz trainiert mit einem Verfahren nach einem der Ansprüche 8-11;
- zweites Beladen (404) des Frachtraums (4), wenn ein Bedarf nach zusätzlicher Ladekapazität (8) besteht, sodass die zur Verfügung stehende Ladekapazität (8) zumindest teilweise verwendet wird.

14. System zur Datenverarbeitung, umfassend Mittel zur Ausführung der Schritte des Verfahrens nach einem der vorherigen Ansprüche 1-7, des Verfahrens nach einem der vorherigen Ansprüche 8-11 und/oder des Verfahrens nach dem vorherigen Anspruch 12.

15. Computerprogramm, umfassend Befehle, die bei der Ausführung des Programms durch einen Computer diesen veranlassen, das Verfahren nach einem der vorherigen Ansprüche 1-7, das Verfahren nach einem der vorherigen Ansprüche 8-11 und/oder das Verfahren nach dem vorherigen Anspruch 12 auszuführen.

16. Computerlesbarer Datenträger, umfassend Befehle, die bei der Ausführung durch einen Computer diesen veranlassen, das Verfahren nach einem der vorherigen Ansprüche 1-7, das Verfahren nach einem der vorherigen Ansprüche 8-11 und/oder das Verfahren nach dem vorherigen Anspruch 12 auszuführen.
